# EUROPÄISCHE PATENTSCHRIFT

(11) **EP 2 212 377 B1**
(45) Veröffentlichungstag und Bekanntmachung des Hinweises auf die Patenterteilung: **08.02.2012**
(21) Anmeldenummer: 08853011.8
(22) Anmeldetag: 20.11.2008
(51) Int. Cl.: C08K 13/02

(54) **FLAMMGESCHÜTZTE EXPANDIERBARE STYROLPOLYMERE UND VERFAHREN ZU IHRER HERSTELLUNG**
FLAMEPROOF EXPANDABLE STYRENE POLYMERS, AND METHOD FOR THE PRODUCTION THEREOF
POLYMÈRES STYRÉNIQUES EXPANSIBLES IGNIFUGÉS ET LEUR PROCÉDÉ DE PRODUCTION

(30) Priorität: 21.11.2007 EP 07121211
(43) Veröffentlichungstag der Anmeldung: 04.08.2010
(73) Patentinhaber: BASF SE, 67056 Ludwigshafen (DE)
(72) Erfinder: ALLMENDINGER, Markus, 67480 Edenkoben (DE); SCHMIED, Bernhard, 67227 Frankenthal (DE); RUCH, Joachim, 67157 Wachenheim (DE); KNOLL, Konrad, 68199 Mannheim (DE); RIETHUES, Michael, 67071 Ludwigshafen (DE); HAHN, Klaus, 67281 Kirchheim (DE); SCHIPS, Carsten, 67342 Speyer (DE); RYLANDER, Jessica, 69136 Karlskoga (SE)
(86) Internationale Anmeldenummer: PCT/EP2008/065879
(87) Internationale Veröffentlichungsnummer: WO 2009/065880

(56) Entgegenhaltungen:
- EP-A- 1 164 158
- EP-A- 1 408 073
- WO-A-2006/007995
- WO-A-2006/007996

## Beschreibung

Die Erfindung betrifft Expandierbare Styrolpolymere (EPS), enthaltend jeweils bezogen auf das Styrolpolymer
a) 0,05 bis 5 Gew.-% einer organische Bromverbindung mit einem Bromgehalt von mindestens 50 Gew.-% als Flammschutzmittel,
b) 0,05 bis 2 Gew.-% eines Flammschutzsynergisten,
c) 0,1 bis 5 Gew.-% eines Metalloxids oder Metallhydroxids des Magnesiums, Aluminiums oder Zinks oder eines Alkakimetallcarbonats oder - hydogencarbonats als Säurefänger,
sowie Verfahren zu ihrer Herstellung.

Verfahren zur Herstellung von flammgeschützten, expandierbaren Styrolpolymeren durch Extrusion einer treibmittelhaltigen Styrolpolymerschmelze sind z. B aus EP-A 0 981 574, WO 97/45477 oder WO 03/46016 bekannt. Hierbei wird das Flammschutzmittel gegebenenfalls zusammen mit weiteren Additiven mit Polystyrol aufgeschmolzen und anschließend ein Treibmittel zugegeben.

Als Flammschutzsynergisten für halogenierte Flammschutzmittel, wie Hexabromcyclododekan (HBCD) werden hierbei in der Regel thermische Radikalbildner, z.B. Dicumylperoxid oder Dicumyl, verwendet.

Durch den Extrusionsprozess erhöht sich die Temperaturbelastung für die thermosensiblen Additive, wie Flammschutzmittel und Peroxide aufgrund der Verweilzeit und durch lokale, scherinduzierte Temperaturspitzen. Die Additive können hierbei abgebaut und die effektiv wirksame Menge im Produkt verringert werden. Bei Verwendung von Flammschutzmitteln wie HBCD kann hoch korrosive Bromwasserstoffsäure entstehen. Der Zerfall von Peroxiden, der durch Säuren noch beschleunigt wird, kann einen starken Molekulargewichtsabbau der Styrolpolymerschmelze bewirken. Expandierbare Styrolpolymere mit zu niedrigen Molekulargewichten zeigen ein hohes Schrumpfen bei der Verarbeitung und schlechtere mechanische Eigenschaften im Polymerschaumstoff.

Ein Verfahren zur Herstellung von flammgeschützten, expandierbaren Polystyrol, bei dem die Verweilzeit des Flammschutzmittels bei einer Schmelzetemperatur im Bereich von 140 bis 220° weniger als 30 Minuten beträgt wird in WO 2006/007995 beschrieben.

Nach dem Verfahren der WO 2006/07996 werden zur einfachen und schonenden Dosierung die Flammschutzsynergisten als Flüssigkeiten oder in Lösung mit einer Pumpe einer treibmittelhaltigen Styrolpolymerschmelze im Hauptstrom zudosiert. Des weiteren wird vorgeschlagen, das Flammschutzmittel mit einem Anteil Styrolpolymerschmelze vorzumischen und über einen Seitenextruder zu dosieren. Dadurch wird zwar die Zeit der Temperaturbelastung der Flammschutzmittel deutlich verkürzt, allerdings kann bereits bei der Vormischung des Flammschutzmittels in der Styrolpolymerschmelze eine thermische Schädigung des Flammschutzmittels auftreten. Außerdem verursacht diese Verfahrenschritt zusätzliche Kosten.

WO 2006/007995 beschreibt ein Verfahren zur Herstellung von flammgeschützten, expandierbaren Styrolpolymeren (EPS) durch Extrusion einer Treibmittel- und Flammschutzmittel-haltige Styrolpolymerschmelze, dadurch gekennzeichnet, dass die Styrolpolymerschmelze Polystyrol, Pentan, Hexabromocyclododekan und Dicumyl enthält.

EP-A-1 164 158 beschreibt flammgeschützte expandierbare Styrolpolymere, die ein Treibmittel, einer organischen Bromverbindung und ein Metallsalz enthalten.

Aufgabe der vorliegenden Erfindung war es daher, den genannten Nachteilen abzuhelfen und expandierbare Styrolpolymere bereitzustellen, die zu Styrolpolymerschaumstoffen mit sehr guten Flammschutzeigenschaften verarbeitet werden können, sowie ein Verfahren zu deren Herstellung durch Schmelzeextrusion bei geringem Molekulargewichtsabbau der Styrolpolymerschmelze.

Demgemäß wurden die oben genannten expandierbaren Styrolpolymeren gefunden.

Bevorzugt liegt das das Gewichtsverhältnis von Flammschutzsynergist zu organischer Bromverbindung im Bereich von 1 bis 20.

Als Flammschutzmittel werden organische Bromverbindung mit einem Bromgehalt von mindestens 50 Gew.-% eingesetzt. Insbesondere geeignet sind aliphatische, cycloaliphatische und aromatische Bromverbindungen, wie Hexabromcyclododekan, Pentabrommonochlorcyclohexan, Pentabromphenylallylether. Bevorzugt werden als Flammschutzmittel Hexabromcyclododekan (HBCD) oderTetrabrombisphenol-A-bis(allylether) eingesetzt:
Das Flammschutzmittel wird in der Regel in Mengen von 0,05 bis 5, bevorzugt von 0,5 bis 2,5 Gew.-%, bezogen auf das Styrolpolymer, eingesetzt.

Geeignete Flammschutzsynergisten sind thermische Radikalbildner mit Halbwertszeiten von 6 Minuten bei Temperaturen im Bereich von 110 bis 300°C, bevorzugt 140 bis 230°C. Besonders bevorzugt werden Dicumyl, Dicumylperoxid, Cumylhydroperoxid, Di-tert.-butyl-peroxid, Tert.-butyl-hydroperoxid oder Mischungen davon, eingesetzt. In der Regel wird der Flammschutzsynergist in Mengen im Bereich von 0,05 bis 2 Gew.-%, bevorzugt im Bereich von 0,1 bis 0,5 Gew.-%, bezogen auf das Styrolpolymer, eingesetzt.

Der Flammschutzsynergist wird bevorzugt rein oder im Falle von Feststoffen in, bei Normalbedingungen (1 bar, 23°C) nahezu gesättigter, Lösung eingesetzt, so dass er mit klassischen Pumpsystemen direkt in einen temperierten und druckbeaufschlagten Raum dosiert werden kann. Durch das Vorliegen in flüssiger Phase ist eine Dosierung so möglich, dass auch von niedrig zerfallenden Peroxiden ausreichende Mengen die Prozess- bzw. Extrusionsbedingungen überstehen und trotzdem eine homogene Einmischung erreicht wird. Bevorzugt wird Dicumylperoxid als Schmelze mit einer Temperatur im Bereich von 35 bis 50°C oder als Lösung in Pentan oder Octan verwendet.

Die als Flammschutzmittel eingesetzten organischen Bromverbindungen zersetzen sich im Temperaturbereich von 150 bis 280° Celsius, wobei Brom, Bromwasserstoffsäure oder Bromradikale entstehen können. Daher wird erfindungsgemäß ein Metallsalz als Säurefänger eingesetzt. Bevorzugt enthalten die expandierbaren Styrolpolymeren ein Metalloxid oder Metallhydroxid des Magnesiums, Aluminiums oder Zinks oder ein Alkakimetallcarbonat oder -hydrogencarbonat als Säurefänger.

Die erfindungsgemäßen, expandierbaren Styrolpolymeren enthalten 0,1 bis 5 Gew.-%, bevorzugt 0,3 bis 1 Gew.-%, bezogen auf das Styrolpolymer, des Säurefängers.

Ein geeignetes Verfahren zur Herstellung der erfindungsgemäßen expandierbaren Styrolpolymeren (EPS) umfasst die Extrusion einer Treibmittel- und Flammschutzmittel-haltigen Styrolpolymerschmelze durch eine Düsenplatte mit anschließender Unterwassergranulation, wobei in die Styrolpolymerschmelze ein Treibmittel und jeweils bezogen auf das Styrolpolymer
a) 0,05 bis 5 Gew.-% einer organische Bromverbindung mit einem Bromgehalt von mindestens 70 Gew.-% als Flammschutzmittel ,
b) 0,05 bis 2 Gew.-% eines Flammschutzsynergisten und
c) 0,1 bis 5 Gew.-% eines Metallsalzes als Säurefänger
eingemischt werden.

Für die Polymerschmelze kommen in der Regel Schmelzen von thermoplastischen Polymeren in Betracht. Bevorzugt werden nicht-kristalline Polymere mit einer Glasübergangstemperatur im Bereich von 70 bis 120°C, besonders bevorzugt Styrolpolymere eingesetzt.

Es hat sich gezeigt, dass Styrolpolymere mit Molekulargewichten Mw von unter 170.000 bei der Granulierung zu Polymerabrieb führen. Bevorzugt weist das expandierbare Styrolpolymer ein Molekulargewicht im Bereich von 190.000 bis 400.000 g/mol, besonders bevorzugt im Bereich von 220.000 bis 300.000 g/mol auf. Aufgrund des Molekulargewichtsabbau durch Scherung und/oder Temperatureinwirkung liegt das Molekulargewicht des expandierbaren Styrolpolymers in der Regel etwa 10.000 g/mol unter dem Molekulargewicht des eingesetzten Styrolpolymers. Das Molekulargewicht kann mittels Gelpermeationschromatographie gegenüber Polystyrol als Standard bestimmt werden.

Um möglichst kleine Granulatpartikel zu erhalten, sollte die Strangaufweitung nach dem Düsenaustritt möglichst gering sein. Es hat sich gezeigt, dass die Strangaufweitung unter anderem durch die Molekulargewichtsverteilung des Styrolpolymeren beeinflusst werden kann. Das expandierbare Styrolpolymer sollte daher bevorzugt eine Molekulargewichtsverteilung mit einer Uneinheitlichkeit M_{w}/Mₙ von höchstens 3.5, besonders bevorzugt im Bereich von 1,5 bis 3 und ganz besonders bevorzugt im Bereich von 1,8 bis 2,6 aufweisen.

Bevorzugt werden als Styrolpolymere glasklares Polystyrol (GPPS), Schlagzähpolystyrol (HIPS), anionisch polymerisiertes Polystyrol oder Schlagzähpolystyrol (A-IPS), Styrol-α-Methstyrol-copolymere, Acrylnitril-Butadien-Styrolpolymerisate (ABS), Styrol-Acrylnitril (SAN) Acrylnitril-Styrol-Acrylester (ASA), Methacrylat-Butadien-Styrol (MBS), Methylmethacrylat-Acrylnitril-Butadien-Styrol (MABS)- polymerisate oder Mischungen davon oder mit Polyphenylenether (PPE) eingesetzt.

Die genannten Styrolpolymeren können zur Verbesserung der mechanischen Eigenschaften oder der Temperaturbeständigkeit gegebenenfalls unter Verwendung von Verträglichkeitsvermittlern mit thermoplastischen Polymeren, wie Polyamiden (PA), Polyolefinen, wie Polypropylen (PP) oder Polyethylen (PE), Polyacrylaten, wie Polymethylmethacrylat (PMMA), Polycarbonat (PC), Polyestern, wie Polyethylenterephthalat (PET) oder Polybutylenterephthalat (PBT), Polyethersulfonen (PES), Polyetherketonen oder Polyethersulfiden (PES) oder Mischungen davon in der Regel in Anteilen von insgesamt bis maximal 30 Gew.-%, bevorzugt im Bereich von 1 bis 10 Gew.-%, bezogen auf die Polymerschmelze, abgemischt werden. Des weiteren sind Mischungen in den genannten Mengenbereichen auch mit z. B hydrophob modifizierten oder funktionalisierten Polymeren oder Oligomeren, Kautschuken, wie Polyacrylaten oder Polydienen, z. B. Styrol-Butadien-Blockcopolymeren oder biologisch abbaubaren aliphatischen oder aliphatisch/aromatischen Copolyestern möglich.

Als Verträglichkeitsvermittler eignen sich z.B. Maleinsäureanhydrid-modifizierte Styrolcopolymere, Epoxidgruppenhaltige Polymere oder Organosilane.

Zur Verbesserung der Verarbeitbarkeit der expandierbaren Styrolpolymeren, insbesondere zur Verringerung des Schrumpfverhaltens beim Vorschäumen, können die Styrolpolymeren mit 0,1 bis 20 Gew.-% Polyphenylenether (PPE) abgemischt werden.

Des Weiteren können die Eigenschaften der expandierbaren Styrolpolymeren, insbesondere bei zu niedrigen Molekulargewichten des Styrol Polymeren, durch Zugabe von 0,1 bis 20 Gew.-% eines hochmolekularen oder verzweigten Polystyrols, bzw. durch Molekulargewichtsaufbau im Extruder oder statischen Mischer durch Zugabe von multifunktionellen Verzweigern oder Peroxiden verbessert werden.

Durch Abmischen mit 5 bis 40 Gew.-% Styrol-Polybutadien-Blockcopolymeren kann die Elastizität der aus den expandierbaren Styrolpolymeren erhältlichen Schaumstoffe verbessert werden.

Der Styrolpolymerschmelze können auch Polymerrecyklate der genannten thermoplastischen Polymeren, insbesondere Styrolpolymere und expandierbare Styrolpolymere (EPS) in Mengen zugemischt werden, die deren Eigenschaften nicht wesentlich verschlechtern, in der Regel in Mengen von maximal 50 Gew.-%, insbesondere in Mengen von 1 bis 20 Gew.-%.

Die treibmittelhaltige Styrolpolymerschmelze enthält in der Regel eine oder mehrere Treibmittel in homogener Verteilung in einem Anteil von insgesamt 2 bis 10 Gew.-% bevorzugt 3 bis 7 Gew.-%, bezogen auf die treibmittelhaltige Styrolpolymerschmelze. Als Treibmittel, eigenen sich die üblicherweise in EPS eingesetzten physikalische Treibmittel, wie aliphatischen Kohlenwasserstoffe mit 2 bis 7 Kohlenstoffatomen, Alkohole, Ketone, Ether oder halogenierte Kohlenwasserstoffe. Bevorzugt wird iso-Butan, n-Butan, iso-Pentan, n-Pentan eingesetzt.

Zur Verbesserung der Verschäumbarkeit können feinverteilte Innenwassertröpfchen in die Styrolpolymermatrix eingebracht werden. Dies kann beispielsweise durch die Zugabe von Wasser in die aufgeschmolzene Styrolpolymermatrix erfolgen. Die Zugabe des Wassers kann örtlich vor, mit oder nach der Treibmitteldosierung erfolgen. Eine homogene Verteilung des Wassers kann mittels dynamischen oder statischen Mischern erreicht werden.

In der Regel sind 0 bis 2, bevorzugt 0,05 bis 1,5 Gew.-% Wasser, bezogen auf das Styrolpolymer, ausreichend.

Expandierbare Styrolpolymere (EPS) mit mindestens 90% des Innenwassers in Form von Innenwassertröpfchen mit einem Durchmesser im Bereich von 0,5 bis 15 µm bilden beim Verschäumen Schaumstoffe mit ausreichender Zellzahl und homogener Schaumstruktur.

Die zugesetzte Treibmittel- und Wassermenge wird so gewählt, dass die expandierbaren Styrolpolymeren (EPS) ein Expansionsvermögen α, definiert als Schüttdichte vor dem Verschäumen/Schüttdichte nach dem Verschäumen höchstens 125 bevorzugt 25 bis 100 aufweisen.

Die expandierbaren Styrolpolymergranulate (EPS) weisen in der Regel eine Schüttdichte von höchstens 700 g/l bevorzugt im Bereich von 590 bis 660 g/l auf. Bei Verwendung von Füllstoffen können in Abhängigkeit von der Art und Menge des Füllstoffes Schüttdichten im Bereich von 590 bis 1200 g/l auftreten.

Besonders bevorzugt wird das Flammschutzmittel und gegebenenfalls weitere temperaturempfindliche Additive über einen Seitenstromextruder oder in Form einer Suspension dispergiert und der Treibmittel-haltigen Styrolpolymerschmelze im Hauptstrom zudosiert und gemeinsam durch eine Düsenplatte mit anschließender Unterwassergranulation extrudiert.. Der Flammschutzsynergist wird bevorzugt über eine Pumpe und Dosierlanze auf gleicher Höhe oder stromabwärts in den Hauptstrom direkt dosiert.

Hierbei kann die Verweilzeit des Flammschutzmittels und des Flammschutzsynergisten bei einer Schmelzetemperatur im Bereich von 140 bis 220°C, bevorzugt im Bereich von 170 bis 200°C bei weniger als 10 Minuten gehalten werden

Mittels einer Drehschieberkolbenpumpe (Orlita) können überraschenderweise hochkonzentrierte Suspensionen kontinuierlich in einen Druckraum, beispielsweise einen statischen Mischer, gefördert werden. Bevorzugt liegt der Feststoffgehalt der Suspension im Bereich von 60 bis 95 Gew.-%, besonders bevorzugt im Bereich von 70 bis 80 Gew.-%. Die suspendierten Feststoffe weisen vorzugsweise einen durch Lichtstreuung ermittelten D50-Wert für die Partikelgröße im Bereich von 1 bis 100 µm auf.

Zur Herabsetzung der Viskosität können der Suspension weitere Zusatzkomponenten, beispielsweise Polyethylenwachse, Treibmittel oder Treibmittelbestandteile, Styrol oder Ethylbenzol zugegeben werden.

Die Suspension weist bei einer Temperatur im Bereich von 20 bis 180°, bevorzugt im Bereich von 30 bis 140°C eine Viskosität von 10 bis 1000 mPas auf. Die Suspension wird vorzugsweise bei Raumtemperatur, kann aber auch in Abhängigkeit der Viskosität bei höheren Temperaturen in die Polymerschmelze eingebracht werden. Beim Erwärmen der Suspension auf Temperaturen im Bereich von 140 bis 180°C kann die Suspension in eine Lösung übergehen. Dies erfolgt beispielsweise bei Hexabromcyclododecan (HBCD) in oligomeren Styrolpolymeren als Suspensionsmedium.

Als Suspensionsmedium werden bevorzugt aliphatische Kohlenwasserstoffe oder aliphatische Kohlenwasserstoffmischungen, beispielsweise Mineralöle, medizinisches Weißöl, Pentane oder Octane eingesetzt. Geeignete Suspensionsmedien sind auch oligomere Polymere mit Molekulargewichten im Bereich von 500 bis 5000 g/mol, insbesondere oligomere Styrolpolymerisate. Die oligomeren Polymeren haben in der Regel einen geringeren weichmachenden Effekt auf die Polymermatrix.

Das erfindungsgemäße Verfahren eignet sich insbesondere zur schonenden Dosierung von temperaturempfindlichen Feststoffpartikeln. Bevorzugt wird hierbei Hexabromcyclododecan (HBCD) mit einem D50-Wert von weniger als 80 µm eingesetzt wird.

Gegebenenfalls können über die Suspension auch weitere Additive, beispielsweise Nukleierungsmittel, Säurefänger für Zersetzungsprodukte der Flammschutzmittel, wie Aluminium- oder Magnesiumhydroxide, Ruß oder Graphit, Flammschutzsynergisten, beispielsweise Peroxide oder Weichmacher eingebracht werden.

Die Suspension kann beispielsweise kontinuierlich mittels eines Intensivmischers hergestellt werden. Die Feststoffpartikel werden in dem Suspensionsmittel fein dispergiert. Um niedrige Viskositäten und eine homogene Verteilung der Feststoffpartikel in der Suspension zu gewährleisten, kann die Zuleitung zusätzliche Mischeinheiten enthalten und beheizt werden.

Durch die Einbringung des Flammschutzmittels in Form einer Suspension lassen sich temperaturempfindliche Additive, insbesondere Flammschutzmittel schonend und homogen in eine Polymerschmelze einarbeiten. Dadurch kann die eingesetzte Menge der temperaturempfindlichen Additive reduziert bzw. die effektive Menge im Produkt erhöht werden. Aufgrund der schonenden Einarbeitung von Flammschutzmitteln ist für einen ausreichenden Flammschutz der Einsatz von Flammschutzsynergisten nicht unbedingt erforderlich.

Eine weitere Möglichkeit zur schonenden Einarbeitung von Temperatur- und/oder scher-sensiblen Additiven, wie die Flammschutzmittel HBCD oder Blähgraphit, in die hochviskose Styrolpolymerschmelze bietet ein Planetwalzenextruder als Seitenstromextruder. Hierbei treten geringere Temperaturspitzen auf und über eine temperierte Schnecke und einen temperierten Mantel kann die Energie aus dem Planetwalzenextruder abgeführt werden. Die ständigen Knete und Ausstreichvorgänge bei dem Planetwalzenextruder ermöglichen eine effektive Verteilung der Additive auch ohne Zugabe von Phasenvermittlern.

Des weiteren können der Styrolpolymerschmelze Additive, Keimbildner, Füllstoffe, Weichmacher, lösliche und unlösliche anorganische und/oder organische Farbstoffe und Pigmente, z.B. IR-Absorber, wie Ruß, natürliche oder synthetische Graphite, beispielsweise graphitierter Acetylen-Koks oder Aluminiumpulver gemeinsam oder räumlich getrennt, z.B. über Mischer oder Seitenextruder zugegeben werden. In der Regel werden die Farbstoffe und Pigmente in Mengen im Bereich von 0,01 bis 30, bevorzugt im Bereich von 1 bis 5 Gew.-% zugesetzt. Zur homogenen und mikrodispersen Verteilung der Pigmente in dem Styrolpolymer kann es insbesondere bei polaren Pigmenten zweckmäßig sein ein Dispergierhilfsmittel, z.B. Organosilane, epoxygruppenhaltige Polymere oder Maleinsäureanhydrid-gepfropfte Styrolpolymere, einzusetzen. Bevorzugte Weichmacher sind Mineralöle, Phthalate, die in Mengen von 0,05 bis 10 Gew.-%, bezogen auf das Styrolpolymerisat, eingesetzt werden können.

Zur Einarbeitung von Pigmenten und IR-Absorbern eignen sich ebenfalls Planetwalzen-extruder. Durch Zugabe von Mahlhilfsmitteln, beispielsweise Kreide oder Kaolin, kann insbesondere Graphit auf die gewünschte Partikelgröße im Bereich von 1 bis 20 µm zerkleinert werden.

Schaumstoffe aus expandierbaren Styrolpolymeren haben als elektrisch isolierende Materialien einen Oberflächenwiderstand von etwa 10¹³ Ohm. Der Oberflächenwiderstand kann durch die Zugabe von 1 bis 20 Gew.-%, insbesondere 5 bis 15 Gew.-% Leitruß oder exfoliertem Graphit in die Styrolpolymerschmelze auf 10⁵ bis 10¹⁰, insbesondere 10⁶ bis 10⁸ Ohm herabgesetzt werden. Die so erhaltenen expandierbaren Styrolpolymeren lassen sich gut verarbeiten und zeigen insbesondere beim Fördern, Abfüllen oder Dosieren keine statische Aufladung. Die daraus hergestellten Schaumstoffe eignen sich hervorragend zur Verpackung von elektronischen Bauteilen.

Zur Herstellung der expandierbaren Styrolpolymerisate wird das Treibmittel in die Polymerschmelze eingemischt. Das Verfahren umfasst die Stufen a) Schmelzerzeugung, b) Mischen c) Kühlen d) Fördern und e) Granulieren. Jede dieser Stufen kann durch die in der Kunststoffverarbeitung bekannten Apparate oder Apparatekombinationen ausgeführt werden. Zur Einmischung eignen sich statische oder dynamische Mischer, beispielsweise Extruder. Die Polymerschmelze kann direkt aus einem Polymerisationsreaktor entnommen werden oder direkt in dem Mischextruder oder einem separaten Aufschmelzextruder durch Aufschmelzen von Polymergranulaten erzeugt werden. Die Kühlung der Schmelze kann in den Mischaggregaten oder in separaten Kühlern erfolgen. Für die Granulierung kommen beispielsweise die druckbeaufschlagte Unterwassergranulierung, Granulierung mit rotierenden Messern und Kühlung durch Sprühvernebelung von Temperierflüssigkeiten oder Zerstäubungsgranulation in Betracht. Zur Durchführung des Verfahrens geeignete Apparateanordnungen sind z.B.:
a) Polymerisationsreaktor - statischer Mischer/Kühler - Granulator
b) Polymerisationsreaktor - Extruder - Granulator
c) Extruder - statischer Mischer - Granulator
d) Extruder - Granulator

Weiterhin kann die Anordnung Seitenextruder zur Einbringung von Additiven, z.B. von Feststoffen oder thermisch empfindlichen Zusatzstoffen aufweisen.

Die treibmittelhaltige Styrolpolymerschmelze wird in der Regel mit einer Temperatur im Bereich von 140 bis 300°C, bevorzugt im Bereich von 160 bis 240°C durch die Düsenplatte gefördert. Eine Abkühlung bis in den Bereich der Glasübergangstemperatur ist nicht notwendig.

Die Düsenplatte wird mindestens auf die Temperatur der treibmittelhaltigen Styrolpolymerschmelze beheizt. Bevorzugt liegt die Temperatur der Düsenplatte im Bereich von 20 bis 100°C über der Temperatur der treibmittelhaltigen Styrolpolymerschmelze. Dadurch werden Polymerablagerungen in den Düsen verhindert und eine störungsfreie Granulierung gewährleistet.

Um marktfähige Granulatgrößen zu erhalten sollte der Durchmesser (D) der Düsenbohrungen am Düsenaustritt im Bereich von 0,2 bis 1,5 mm, bevorzugt im Bereich von 0,3 bis 1,2 mm, besonders bevorzugt im Bereich von 0,3 bis 0,8 mm liegen. Damit lassen sich auch nach Strangaufweitung Granulatgrößen unter 2 mm, insbesondere im Bereich 0,4 bis 1,4 mm gezielt einstellen.

Die Strangaufweitung kann außer über die Molekulargewichtsverteilung durch die Düsengeometrie beeinflusst werden. Die Düsenplatte weist bevorzugt Bohrungen mit einem Verhältnis L/D von mindestens 2 auf, wobei die Länge (L) den Düsenbereich, dessen Durchmesser höchstens dem Durchmesser (D) am Düsenaustritt entspricht, bezeichnet. Bevorzugt liegt das Verhältnis L/D im Bereich von 3 - 20.

Im allgemeinen sollte der Durchmesser (E) der Bohrungen am Düseneintritt der Düsenplatte mindestens doppelt so groß wie der Durchmesser (D) am Düsenaustritt sein.

Eine Ausführungsform der Düsenplatte weist Bohrungen mit konischem Einlauf und einem Einlaufwinkel α kleiner 180°, bevorzugt im Bereich von 30 bis 120° auf. In einer weiteren Ausführungsform besitzt die Düsenplatte Bohrungen mit konischem Auslauf und einen Auslaufwinkel β kleiner 90°, bevorzugt im Bereich von 15 bis 45°. Um gezielte Granulatgrößenverteilungen der Styrolpolymeren zu erzeugen kann die Düsenplatte mit Bohrungen unterschiedlicher Austrittsdurchmesser (D) ausgerüstet werden. Die verschiedenen Ausführungsformen der Düsengeometrie können auch miteinander kombiniert werden.

Ein besonders bevorzugtes Verfahren zur Herstellung der erfindungsgemäßen, expandierbaren Styrolpolymeren umfasst die Schritte
a) Polymerisation von Styrolmonomer und gegebenenfalls copolymersierbaren Monomeren zu einem Styrolpolymer mit einem mittleren Molekulargewicht im Bereich von 160.000 bis 400.000 g/mol, bevorzugt im Bereich von 220.000 bis 330.000 g/mol,
b) Entgasung der erhaltenen Styrolpolymerschmelze,
c) Einmischen des Treibmittels, Flammschutzsynergist, Säurefänger und gegebenenfalls weiterer Additiven, in die Styrolpolymerschmelze mittels statischen oder dynamischen Mischer bei einer Temperatur von mindestens 150°C, bevorzugt im Bereich von 180 - 260°C,
d) Kühlen der treibmittelhaltigen Styrolpolymerschmelze auf eine Temperatur, die mindestens 120°C, bevorzugt 150 - 200°C beträgt,
e) Eintragen des Flammschutzmittels in Form einer Suspension mittels einer Drehschieberkolbenpumpe in die druckbeaufschlagte Polymerschmelze,
f) Austrag durch eine Düsenplatte mit Bohrungen, deren Durchmesser am Düsenaustritt höchstens 1,5 mm beträgt und
g) Granulieren der treibmittelhaltigen Schmelze.

In Schritt g) kann die Granulierung direkt hinter der Düsenplatte unter Wasser bei einem Druck im Bereich von 1 bis 25 bar, bevorzugt 5 bis 15 bar erfolgen.

Aufgrund der Polymerisation in Stufe a) und Entgasung in Stufe b) steht für die Treibmittelimprägnierung in Stufe d) direkt eine Polymerschmelze zur Verfügung und ein Aufschmelzen von Styrolpolymeren ist nicht notwendig. Dies ist nicht nur wirtschaftlicher, sondern führt auch zu expandierbaren Styrolpolymeren (EPS) mit niedrigen Styrolmonomergehalten, da die mechanischen Schereinwirkung im Aufschmelzbereich eines Extruders, die in der Regel zu einer Rückspaltung von Monomeren führt, vermieden wird. Um den Styrolmonomerengehalt niedrig zu halten, insbesondere unter 500 ppm mit Styrolmonomergehalten, ist es ferner zweckmäßig, den mechanischen und thermischen Energieeintrag in allen folgenden Verfahrensstufen so gering wie möglich zu halten. Besonders bevorzugt werden daher Scherraten unter 50/sec, bevorzugt 5 bis 30/sec, und Temperaturen unter 260°C sowie kurze Verweilzeiten im Bereich von 1 bis 20, bevorzugt 2 bis 10 Minuten in den Stufen d) bis f) eingehalten. Besonders bevorzugt werden ausschließlich statische Mischer und statische Kühler im gesamten Verfahren eingesetzt. Die Polymerschmelze kann durch Druckpumpen, z.B. Zahnradpumpen gefördert und ausgetragen werden.

Eine weitere Möglichkeit zur Verringerung des Styrolmonomerengehaltes und/oder Restlösungsmittel wie Ethylbenzol besteht darin, in Stufe b) eine Hochentgasung mittels Schleppmitteln, beispielsweise Wasser, Stickstoff oder Kohlendioxid, vorzusehen oder die Polymerisationsstufe a) anionisch durchzuführen. Die anionische Polymerisation von Styrol führt nicht nur zu Styrolpolymeren mit niedrigem Styrolmonomeranteil, sondern gleichzeitig zur geringen Styrololigomerenanteilen.

Zur Verbesserung der Verarbeitbarkeit können die fertigen expandierbaren Styrolpolymergranulate durch Glycerinester, Antistatika oder Antiverklebungsmittel beschichten werden.

Das EPS Granulat kann mit Glycerinmonostearat GMS (typischerweise 0,25%), Glycerintristearat (typischerweise 0,25%) feinteiliger Kieselsäure Aerosil R972 (typischerweise 0,12%) und Zn-Stearat (typischerweise 0,15%), sowie Antistatikum beschichtet werden.

Die expandierdierbaren Styrolpolymergranulate können in einem ersten Schritt mittels Heißluft oder Wasserdampf zu Schaumpartikeln mit einer Dichte im Bereich von 8 bis 100 g/l vorgeschäumt und in einem 2. Schritt in einer geschlossenen Form zu Partikelformteilen verschweißt werden.

Durch die erfindungsgemäße Verwendung des Metallsalzes als Säurefänger wird der Molekulargewichtsabbau des Styrolpolymeren verringert und die Flammschutzeigenschaften des Styrolpolymerschaumstoffes bei vergleichbaren Einsatzmengen an Flammschutzmittel und Flammschutzsynergist verbessert.

### Beispiele:

Alle Mengenangaben sind Gewichtsanteile und beziehen sich auf die Gesamtmenge Polymer (Haupt- und Nebenstrom).

### Einsatzstoffe:

PS158 K (Polystyrol der BASF AG mit einer Viskositätszahl VZ von 98 ml/g, mittlerem Molekulargewicht M_{w} von 280.000 g/mol und einer Uneinheitlichkeit M_{w}/Mₙ von 2,8)

PS168 N (Polystyrol der BASF AG mit einer Viskositätszahl VZ von 115 ml/g, mittlerem Molekulargewicht M_{w} von 310.000 g/mol und einer Uneinheitlichkeit M_{w}/Mₙ von 2,5)

HBCD: Hexabromcyclododecan FR-1206 Hat der Fa. Eurobrom (Flammschutzmittel) in Form einer 70 Gew.-%igen Suspension in Weißöl.

### Flammschutzsynergisten:

Perkadox® 30
50 gew.-%ige Lösung von Dicumylperoxid in Pentan

### Beispiel 1:

In eine Polystyrolschmelze aus PS 158 K der BASF Aktiengesellschaft wurden 6,0 Gew.-% Pentan und 3,6 Gew.-% Graphit (Superior 85/95) eingemischt. Nach Abkühlen der treibmittelhaltigen Schmelze von ursprünglich 260 °C auf eine Temperatur von 180 C, wurde über einen Seitenstromextruder ein Gemisch aus Polystyrolschmelze, HBCD (1,5 Gew.-%), Aluminiumhydroxid (0,5 Gew.-%) und Luwax AH3 (0,2 Gew.-%) zugegeben und in den Hauptstrom eingemischt. Zusätzlich wurden stromabwärts über eine Dosierlanze in Verbindung mit einer Kolbenpumpe 0,4 Gew.-% Dicumylper-oxid gelöst in Pentan (50:50) als Flammschutzsynergist dem gekühlten Hauptstrom zugeführt.

Das Gemisch aus Polystyrolschmelze, Graphit, Treibmittel, Flammschutzmittel und Flammschutzsynergist wurde mit 60 kg/h durch eine Düsenplatte mit 32 Bohrungen (Durchmesser der Düse 0,75 mm) gefördert. Mit Hilfe einer druckbeaufschlagten Unterwassergranulierung (10 bar) wurden kompakte Granulate mit enger Größenverteilung hergestellt.

Die erhaltenen expandierbaren Polystyrolgranulate wurden in strömendem Wasserdampf zu Schaumstoffpartikel mit einer Dichte von etwa 20 g/l vorgeschäumt und nach 24-stündiger Lagerung in gasdichten Formen mit Wasserdampf zu Schaumstoffkörpern verschweißt. Der Schaumstoff wies Oberflächenwiderstand von 10¹³ Ohm auf (Elektrische Leitfähigkeitsmessung nach ISO 3915).

### Beispiel 2:

Beispiel 1 wurde wiederholt mit dem Unterschied, dass über den Seitenstrom 2 Gew.-% Aluminiumhydroxid und über die Dosierlanze 0,6 Gew.-% Dicumylperoxid dosiert wurden.

### Beispiel 3:

Beispiel 1 wurde wiederholt mit dem Unterschied, dass über die Dosierlanze 0,4 Gew.-% Dicumylperoxid als Schmelze dem gekühlten Hauptstrom zugeführt wurden.

### Beispiel 4:

Beispiel 1 wurde wiederholt mit dem Unterschied, dass über den Seitenstrom anstelle von HBCD 1,5 Gew.-% Tetrabrombisphenol-A-bis(allylether) (Great Lakes BE 51®, Chemtura) zugeführt wurden.

### Beispiel 5:

Beispiel 1 wurde wiederholt mit dem Unterschied, dass für die Dosierung über den Seitenstrom ein Planetwalzenextruder eingesetzt wurde.

### Vergleichsversuch V1:

Beispiel 1 wurde wiederholt mit dem Unterschied, dass über den Seitenstrom anstelle von Aluminiumhydroxid 2 Gew.-% Kreide (Ulmer Weiß XL) zugegeben wurden.

Die Viskositätszahl VZ und die Ergebnisse des Brandschutztestes, gemessen im EPS-Partikelschaumstoff, sind in Tabelle 1 zusammengefasst. Produkte mit Nachbrennzeiten von 6 Sekunden oder weniger sind geeignet den B1 und B2 Test nach deutscher Baunorm (DIN 4102) zu bestehen.

**Tabelle 1:**

| Beispiel | VZ | Nachbrennzeit [sec.] |
|---|---|---|
| 1 | 83 | 5 |
| 2 | 81 | 4 |
| 3 | 82 | 3 |
| 4 | 82 | 6 |
| 5 | 83 | 2,5 |
| V1 | 70 | 10 |

### Beispiel 6:

Beispiel 1 wurde wiederholt mit dem Unterschied, dass die Polymerschmelze im Haupt- und Nebenstrom 90 Gew.-% Polystyrol 158 K und 10 Gew.-% Polystyrol 168 N enthielt.

### Beispiel 7:

Beispiel 1 wurde wiederholt mit dem Unterschied, dass die Polymerschmelze im Haupt- und Nebenstrom 98 Gew.-% Polystyrol 158 K und 2 Gew.-% eines Ultrahochmolekularen Polystyrols (Mw = 800.000 g/mol, Uneinheitlichkeit M_{w}/Mₙ = 3) enthielt.

### Beispiel 8:

Beispiel 1 wurde wiederholt mit dem Unterschied, dass die Polymerschmelze im Haupt- und Nebenstrom 98 Gew.-% Polystyrol 158 K und 10 Gew.-% Polyphenylenether PPE (Noryl 8890 C von GE) enthielt.

### Beispiel 9:

Beispiel 1 wurde wiederholt mit dem Unterschied, dass die Polymerschmelze im Haupt- und Nebenstrom 87,5 Gew.-% Polystyrol 158 K, 8 Gew.-% Polyphenylenether PPE (Noryl EF von GE) und 4,5 Gew.-% eines elastomeren Styrol-Butadien-Blockcopolymeren (Styroflex® 2G55) enthielt. Das Schäumverhalten ist in Tabelle 2 zusammengestellt. Ein vorzeitiges Schrumpfen konnte vermieden werden.

**Tabelle 2**

| | | | | | | | |
|---|---|---|---|---|---|---|---|
| Schäumzeit [sec] | 2 | 3 | 4 | 5 | 6 | 7 | 8 |
| Schüttdichte [g/l] | 29,4 | 27,8 | 26,3 | 25,0 | 25,0 | 26,3 | 27,8 |

### Beispiel 10:

Beispiel 1 wurde wiederholt mit dem Unterschied, dass der Hauptstrom Polystyrol 158K, 6 Gew.-% Pentan, 3,6 Gew.-% Graphit UF 298 der Fa. Kropfmühl AG und 10 Gew.-% Leitruß enthielt. Der daraus erhaltende Schaumstoff wies einen Oberflächenwiderstand von 10⁶ Ohm auf (Elektrische Leitfähigkeitsmessung nach ISO 3915).

### Beispiel 11

Beispiel 10 wurde wiederholt mit dem Unterschied, dass anstelle des Leitrußes 10 Gew.-% exfolierter Graphit (hergestellt durch Expansion von expandierbarem Graphit und anschließender Mahlung) enthielt. Der daraus erhaltende Schaumstoff wies einen Oberflächenwiderstand von 10⁷ Ohm auf (Elektrische Leitfähigkeitsmessung nach ISO 3915).

## Patentansprüche

1. Expandierbare Styrolpolymere (EPS), enthaltend jeweils bezogen auf das Styrolpolymer
a) 0,05 bis 5 Gew.-%. einer organische Bromverbindung mit einem Bromgehalt von mindestens 50 Gew.-% als Flammschutzmittel,
b) 0,05 bis 2 Gew.-% eines Flammschutzsynergisten,
c) 0,1 bis 5 Gew.-% eines Metalloxids oder Metallhydroxids des Magnesiums, Aluminiums oder Zinks oder eines Alkakimetallcarbonats oder - hydogencarbonats als Säurefänger.

2. Expandierbare Styrolpolymere nach Anspruch 1, **dadurch gekennzeichnet, dass** das Gewichtsverhältnis von Flammschutzsynergist zu organischer Bromverbindung im Bereich von 1 bis 20 liegt.

3. Expandierbare Styrolpolymere nach Anspruch 1 oder 2, **dadurch gekennzeichnet, dass** sie als Flammschutzmittel Hexabromcyclododekan enthalten.

4. Expandierbare Styrolpolymere nach einem der Ansprüche 1 bis 3, **dadurch gekennzeichnet, dass** sie als Flammschutzsynergist Dicumyl, Dicumylperoxid, Cumylhydroperoxid, Di-tert.-butyl-peroxid, Tert.-butyl-hydroperoxid oder Mischungen davon, enthalten.

5. Expandierbare Styrolpolymere nach einem der Ansprüche 1 bis 4, **dadurch gekennzeichnet, dass** sie 1 bis 10 Gew.-% Pentan als Treibmittel enthalten.

6. Verfahren zur Herstellung von expandierbaren Styrolpolymeren (EPS) durch Extrusion einer Treibmittel- und Flammschutzmittel-haltigen Styrolpolymerschmelze durch eine Düsenplatte mit anschließender Unterwassergranulation, **dadurch gekennzeichnet, dass** in die Styrolpolymerschmelze ein Treibmittel und jeweils bezogen auf das Styrolpolymer
a) 0,05 bis 5 Gew.-% einer organische Bromverbindung mit einem Bromgehalt von mindestens 70 Gew.-% als Flammschutzmittel ,
b) 0,05 bis 2 Gew.-% eines Flammschutzsynergisten und
c) 0,1 bis 5 Gew.-% eines Metalloxids oder Metallhydroxid des Magnesiums, Aluminiums oder Zinks oder eines Alkakimetallcarbonats oder - hydogencarbonats als Säurefänger
eingemischt werden.

## Claims

1. An expandable styrene polymer (EPS) comprising, in each case based on the styrene polymer,
a) from 0.05 to 5% by weight of an organic bromine compound whose bromine content is at least 50% by weight, as flame retardant,
b) from 0.05 to 2% by weight of a flame retardant synergist,
c) from 0.1 to 5% by weight of a metal oxide or metal hydroxide of magnesium, of aluminum, or of zinc, or an alkali metal carbonate or alkali metal hydrogen carbonate, as acid scavenger.

2. The expandable styrene polymer according to claim 1, wherein the ratio by weight of flame retardant synergist to organic bromine compound is in the range from 1 to 20.

3. The expandable styrene polymer according to claim 1 or 2, which comprises hexabromocyclododecane as flame retardant.

4. The expandable styrene polymer according to any of claims 1 to 3, which comprises, as flame retardant synergist, dicumyl, dicumyl peroxide, cumyl hydroperoxide, di-tert-butyl peroxide, tert-butyl hydroperoxide, or a mixture thereof.

5. The expandable styrene polymer according to any of claims 1 to 4, which comprises from 1 to 10% by weight of pentane as blowing agent.

6. A process for the production of expandable styrene polymers (EPS) via extrusion of a styrene polymer melt comprising blowing agent and comprising flame retardant through a die plate with attached underwater pelletizer, which comprises incorporation by mixing of a blowing agent and of, in each case based on the styrene polymer,
a) from 0.05 to 5% by weight of an organic bromine compound whose bromine content is at least 70% by weight, as flame retardant,
b) from 0.05 to 2% by weight of a flame retardant synergist and
c) from 0.1 to 5% by weight of a metal oxide or metal hydroxide of magnesium, of aluminum, or of zinc, or an alkali metal carbonate or alkali metal hydrogen carbonate, as acid scavenger,
into the styrene polymer melt.

## Revendications

1. Polymères expansibles de styrène (EPS), contenant, à chaque fois par rapport au polymère de styrène,
a) 0,05 à 5% en poids d'un composé bromé organique, présentant une teneur en brome d'au moins 50% en poids comme agent ignifuge,
b) 0,05 à 2% en poids d'un synergiste d'agent ignifuge,
c) 0,1 à 5% en poids d'un oxyde métallique ou d'un hydroxyde métallique du magnésium, de l'aluminium ou du zinc ou d'un carbonate ou d'un hydrogénocarbonate de métal alcalin comme capteur d'acide.

2. Polymères expansibles de styrène selon la revendication 1, **caractérisés en ce que** le rapport pondéral du synergiste d'agent ignifuge au composé bromé organique se situe dans la plage de 1 à 20.

3. Polymères expansibles de styrène selon la revendication 1 ou 2, **caractérisés en ce qu'**ils contiennent, comme agent ignifuge, de l'hexabromocyclododécane.

4. Polymères expansibles de styrène selon l'une quelconque des revendications 1 à 3, **caractérisés en ce qu'**ils contiennent comme synergiste d'agent ignifuge du dicumyle, du peroxyde de dicumyle, de l'hydroperoxyde de cumyle, du peroxyde de di-tert-butyle, de l'hydroperoxyde de tert-butyle ou leurs mélanges.

5. Polymères expansibles de styrène selon l'une quelconque des revendications 1 à 4, **caractérisés en ce qu'**ils contiennent 1 à 10% en poids de pentane comme agent gonflant.

6. Procédé pour la préparation de polymères expansibles de styrène (EPS) par extrusion d'une masse fondue de polymère de styrène contenant un agent gonflant et un agent ignifuge à travers une filière, suivie d'une granulation sous eau, **caractérisé en ce qu'**on mélange dans la masse fondue de polymère de styrène un agent gonflant et, à chaque fois par rapport au polymère de styrène,
a) 0,05 à 5% en poids d'un composé brome organique, présentant une teneur en brome d'au moins 70% en poids comme agent ignifuge,
b) 0,05 à 2% en poids d'un synergiste d'agent ignifuge et
c) 0,1 à 5% en poids d'un oxyde métallique ou d'un hydroxyde métallique du magnésium, de l'aluminium ou du zinc ou d'un carbonate ou d'un hydrogénocarbonate de métal alcalin comme capteur d'acide.
